**Europäisches Patentamt**

**European Patent Office**

**Office européen des brevets**

(19)

(11) Veröffentlichungsnummer: **0 064 678**
**B1**

(12) # EUROPÄISCHE PATENTSCHRIFT

(45) Veröffentlichungstag der Patentschrift:
**13.02.85**

(51) Int. Cl.⁴: **F 16 H  37/08, B 60 K  17/08**

(21) Anmeldenummer: **82103670.4**

(22) Anmeldetag: **29.04.82**

(54) Getriebeaggregat für Fahrzeuge, insbesondere für Kraftfahrzeuge mit Frontantrieb.

(30) Priorität: **05.05.81  DE 3117657**

(43) Veröffentlichungstag der Anmeldung:
**17.11.82 Patentblatt 82/46**

(45) Bekanntmachung des Hinweises auf die Patenterteilung:
**13.02.85 Patentblatt 85/7**

(84) Benannte Vertragsstaaten:
**AT BE CH DE FR GB IT LI LU NL SE**

(56) Entgegenhaltungen:
**DE - A - 2 928 191**
**DE - A - 2 948 194**
**DE - A - 2 948 681**
**DE - C - 1 630 298**
**FR - A - 2 450 386**
**GB - A - 1 575 381**
**GB - A - 2 058 250**
**GB - A - 2 064 683**

(73) Patentinhaber: **FORD-WERKE AKTIENGESELLSCHAFT, Ottoplatz 2 Postfach 21 03 69, D-5000 Köln 21 (DE)**
Patentinhaber: **Van Doorne's Transmissie B.V., Dr. Hub van Doorneweg 120 Postbus 500, NL-5026 RA Tilburg (NL)**

(72) Erfinder: **Abromeit, Gerhard, Ende Fluhdänne 4, D-5000 Köln 80 (DE)**
Erfinder: **Suab, Eugen, Masurenstrasse 17, D-5000 Köln 71 (DE)**
Erfinder: **van Deursen, Petrus Hendricus, Hoendiep 36, Deurne (NL)**

(74) Vertreter: **Gauger, Hans-Peter, Dipl.-Ing., Patentanwälte Dipl.-Ing.Hans-Jürgen Müller Dipl.-Chem.Dr.Gerhard Schupfner Dipl.-Ing.Hans-Peter Gauger Lucile-Grahn-Strasse 38, D-8000 München 80 (DE)**

## Beschreibung

Die Erfindung bezieht sich auf ein Getriebeaggregat für Fahrzeuge, insbesondere für Kraftfahrzeuge mit Frontantrieb, mit einem in Fahrzeugquerrichtung angeordneten Antriebsmotor, dessen Antriebswelle die Primärwelle eines stufenlos regelbaren und mittels eines vorzugsweise als Planetenradgetriebe ausgebildeten Vorwärtsgang-Rückwärtsgang-Umschaltgetriebes schaltbaren Umschlingungsgetriebes antreibt, dessen über ein Umschlingungsorgan in gleicher Drehrichtung getriebene Sekundärwelle koaxial zu dem Antriebsritzel eines Differentialgetriebes mit Achsabtriebswellen angeordnet ist.

Bei einem aus der FR-A-2 450 386 bekannten Getriebeaggregat der vorgenannten Art sind bezüglich der Anordnung der einzelnen Wellen drei Hauptachsen vorgegeben. In der ersten Hauptachse sind dabei die Antriebswelle des Antriebsmotors und die Primärwelle des stufenlos regelbaren Umschlingungsgetriebes angeordnet, dessen Sekundärwelle gemeinsam mit den Ein- und Ausgangsgliedern des für die Umschaltbarkeit aus zwei Planetenrädersätzen gebildeten schaltbaren Vorwärtsgang-Rückwärtsgang-Umschaltgetriebes sowie mit dem Antriebsritzel des Differentialgetriebes in der hierzu parallelen zweiten Hauptachse angeordnet ist. Diese zwei zueinander parallelen Hauptachsen, die in der Fahrzeuglängsrichtung ausgerichtet sind und damit für den Antriebsmotor die Bereitstellung eines verhältnismäßig langen Einbauraumes erfordern, ergeben für die zu den angetriebenen Vorderrädern führenden Achsantriebswellen des Differentialgetriebes eine Ausrichtung der dritten Hauptachse in der Fahrzeugquerrichtung, wodurch das Differentialgetriebe eine zu Schwierigkeiten bei der Montage und der Demontage führende Anordnung unterhalb der Ölwanne des Antriebsmotors erfährt. Das bekannte Getriebeaggregat dieser Drei-Achsen-Bauart weist andererseits jedoch den für eine Serienfertigung sehr wichtigen Vorteil auf, daß es ohne größere Veränderungen für ein gleiches Fahrzeugmodell wahlweise auch mit einem von Hand zu schaltenden Zahnräder-Wechselgetriebe anstelle des stufenlos regelbaren Umschlingungsgetriebes angeboten werden kann, weil es hierzu nur erforderlich ist, die sich dann aus einem solchen Austausch ergebende Umkehrung der Drehrichtung des Antriebsritzels des Differentialgetriebes mit einer entsprechend seitenvertauschten Anordnung des mit dem Antriebsritzel kämmenden Tellerrades des Differentialgetriebes zu berücksichtigen. Diese einfache Austauschbarkeit ist grundsätzlich auch dann gegeben, wenn bei diesen Getriebeaggregaten der Drei-Achsen-Bauart das schaltbare Vorwärtsgang-Rückwärtsgang-Umschaltgetriebe in der Ausbildung eines Planetenradgetriebes nach der DE-C3-1 630 298 dann gemeinsam mit der Antriebswelle des Antriebsmotors und der Primärwelle des stufenlos regelbaren Umschlingungsgetriebes in der ersten Hauptachse angeordnet ist.

Die Erfindung, wie sie in den Patentansprüchen gekennzeichnet ist, löst die Aufgabe, ein Getriebeaggregat der gattungsgemäßen Drei-Achsen-Bauart so auszubilden, daß es unter Beibehaltung einer für die Serienfertigung einfachen und nur mit wenigen Veränderungen verbundenen Austauschbarkeit des stufenlos regelbaren Umschlingungsgetriebes gegen ein von Hand zu schaltendes Zahnräder-Wechselgetriebe entsprechend der im Kraftfahrzeugbau anhaltenden Entwicklung kompakter und sparsamer gebaut werden kann.

Die durch die Erfindung erreichten Vorteile liegen im wesentlichen darin, daß durch die zu dem schaltbaren Vorwärtsgang-Rückwärtsgang-Umschaltgetriebe zusätzliche Anordnung des Umkehr- und Reduktionsgetriebes in der Ausbildung eines nicht schaltbaren Planetenradgetriebes koaxial zu der Sekundärwelle des stufenlos regelbaren Umschlingungsgetriebes jetzt alle drei Hauptachsen des Getriebeaggregates eine raumsparende Parallelanordnung aufweisen. Wenn bei dieser Parallelanordnung der drei Hauptachsen das stufenlos regelbare Umschlingungsgetriebe gegen ein von Hand zu schaltendes Zahnräder-Wechselgetriebe ausgetauscht werden soll, ist es dann nur erforderlich, die Lage der in der Getriebevariante mit dem Umschlingungsgetriebe zur Anordnung des Umkehr- und Reduktionsgetriebes vorgesehenen zweiten Hauptachse relativ zu den unverändert beibehaltenen Lagen der beiden anderen parallelen Hauptachsen zu verändern und die mit dem Differentialgetriebe erreichbare Untersetzung an die dann bezüglich des Umschlingungsgetriebes unterschiedliche Gesamtuntersetzung des Getriebeaggregates anzupassen. Auch für diese zweite Getriebevariante mit einem von Hand zu schaltenden Zahnräder-Wechselgetriebe ist dann sichergestellt, daß das Antriebsritzel des Differentialgetriebes in der gleichen Drehrichtung wie bei der Getriebevariante mit dem stufenlos regelbaren Umschlingungsgetriebe angetrieben wird, weshalb es auch ohne weiteres möglich ist, mit einer wie bei den bekannten Getriebeaggregaten wahlweise vorgesehenen Anordnung des schaltbaren Vorwärtsgang-Rückwärtsgang-Umschaltgetriebes entweder in der ersten oder in der zweiten Hauptachse unter Beibehaltung des durch die Parallelanordnung der drei Hauptachsen ermöglichten kompakten Getriebeausführung unterschiedliche Achsübersetzungen mit entsprechenden Varianten des Antriebsmotors bereitzustellen. Es ist dabei davon auszugehen, daß in Abhängigkeit von der jeweils verwendeten Variante des Antriebsmotors auch verhältnismäßig stark unterschiedliche Gesamtuntersetzungen erforderlich werden können, die dann durch eine entsprechende Auslegung des als nicht schaltbares Planetenradgetriebe ausgebildeten Umkehr- und Reduktionsgetriebes sowie durch eine entsprechende Auslegung des Differentialgetriebes so zu berücksichtigen sind, daß der innerhalb des Umschlingungsgetriebes vorhandene Übersetzungsbereich voll als Regelbereich des Getriebeaggregats erhalten bleibt.

Die Erfindung wird nachfolgend anhand zweier in der Zeichnung schematisch dargestellter Ausführungsbeispiele näher erläutert. Es zeigt

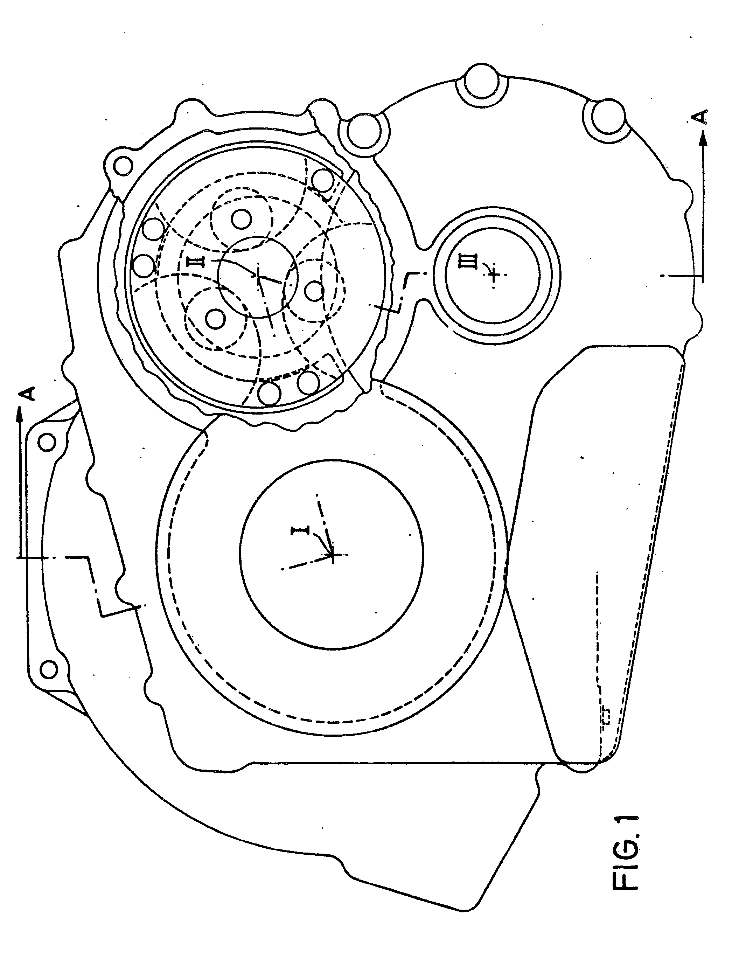

Fig. 1 eine Stirnansicht des Getriebeaggregats in Richtung auf den Antriebsmotor,

Fig. 2 einen Längsschnitt des Getriebeaggregats nach der Linie A-A in Fig. 1 und

Fig. 3 einen Längsschnitt des Getriebeaggregats ähnlich demjenigen in Fig. 2 in einer Ausführung mit einer bevorzugten Lageranordnung im Bereich des Umkehr- und Reduktionsgetriebes.

Das in der Zeichnung dargestellte Getriebeaggregat einer Drei-Achsen-Bauart umfaßt drei zueinander parallele Hauptachsen I, II und III. In der Hauptachse I ist die Antriebswelle 1 eines Antriebsmotors angeordnet, die über eine hydraulische Kupplung, einen hydrokinetischen Drehmomentwandler, eine Fliehkraftkupplung, eine Elektromagnetkupplung oder eine andere herkömmliche Anfahreinheit 2 mit einer koaxial zu der Primärwelle 3 eines Umschlingungsgetriebes 4 verlaufenden Antriebswelle 5 des Getriebeaggregats verbunden ist. Die Antriebswelle 5 ist mit dem ebenfalls in dieser Hauptachse I angeordneten Eingangsglied eines der Primärwelle 3 vorgeschalteten, als Planetenradgetriebe 6 ausgebildeten Vorwärtsgang-Rückwärtsgang-Umschaltgetriebes verbunden, dessen Ausgangsglied mit der Primärwelle 3 des damit wahlweise für einen Vorwärtsgang und für einen Rückwärtsgang des Getriebeaggregats schaltbaren Umschlingungsgetriebes 4 verbunden ist.

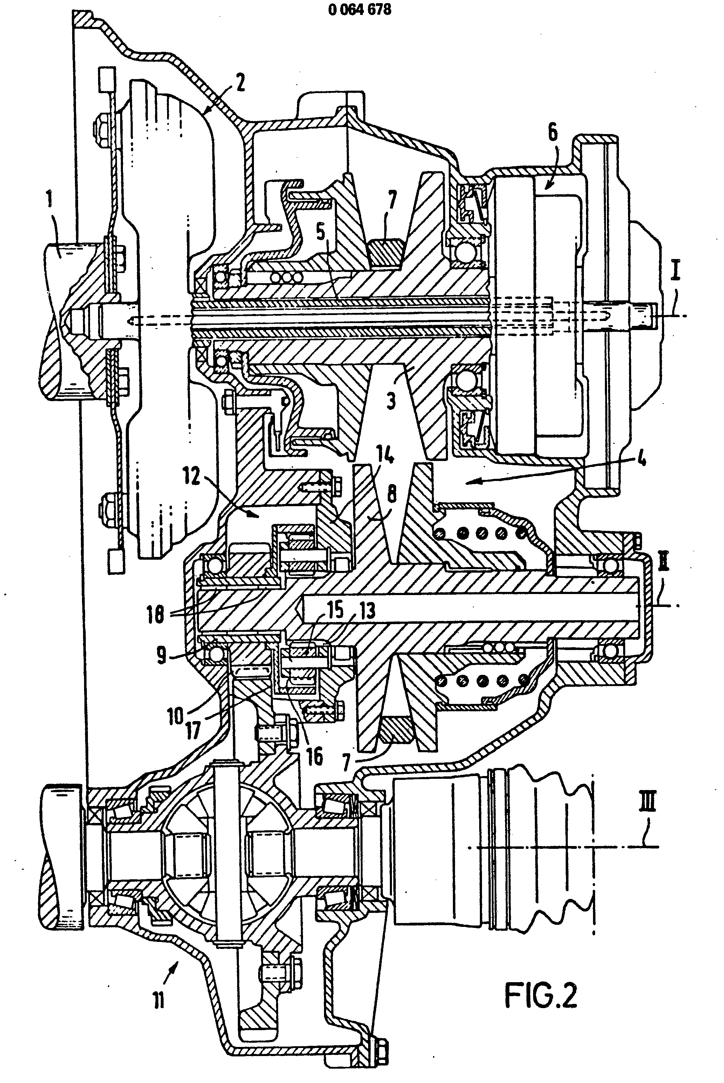

In der zweiten Hauptachse II ist die Sekundärwelle 8 des Umschlingungsgetriebes 4 angeordnet, die unter Vermittlung eines Umschlingungsorgans 7 durch die Primärwelle 3 angetrieben wird. Das Umschlingungsgetriebe 4 weist eine an sich bekannte und daher nicht näher erläuterte Ausbildung mit einer stufenlosen Regelbarkeit des Übersetzungsverhältnisses von der Primärwelle 3 auf die Sekundärwelle 8 auf. Die Sekundärwelle 8 ist als eine innenliegende Welle ausgebildet, zu der koaxial eine äußere Hohlwelle 9 angeordnet ist. Bei der Ausführungsform des Getriebeaggregats gemäß Fig. 2 ist zwischen der Sekundärwelle 8 und dem Antriebsritzel 10 zusätzlich ein als nicht schaltbares Planetenradgetriebe ausgebildetes Umkehr- und Reduktionsgetriebe 12 angeordnet, durch welches das Antriebsritzel 10 des Differentialgetriebes 11 mit einer untersetzten Drehzahl in entgegengesetzter Richtung zu der Sekundärwelle 8 angetrieben wird. Die Sekundärwelle 8 bildet ein Sonnenrad 13 dieses Planetenradgetriebes, das mit auf einem Planetenradträger 14 gelagerten Planetenrädern 15 in Eingriff steht. Die Planetenräder 15 stehen mit einem Ringrad 16 in Eingriff, das über einen Steg 17 mit der das Antriebsritzel 10 tragenden Hohlwelle 9 treibend verbunden ist. Die Hohlwelle 9 ist für die Abstützung des Antriebsritzels 10 über Nadellager 18 auf einem Ansatz der Sekundärwelle 8 drehbar gelagert. In der Hauptachse III sind die zu den angetriebenen Vorderrädern führenden Achsantriebswellen des Differentialgetriebes 11 angeordnet.

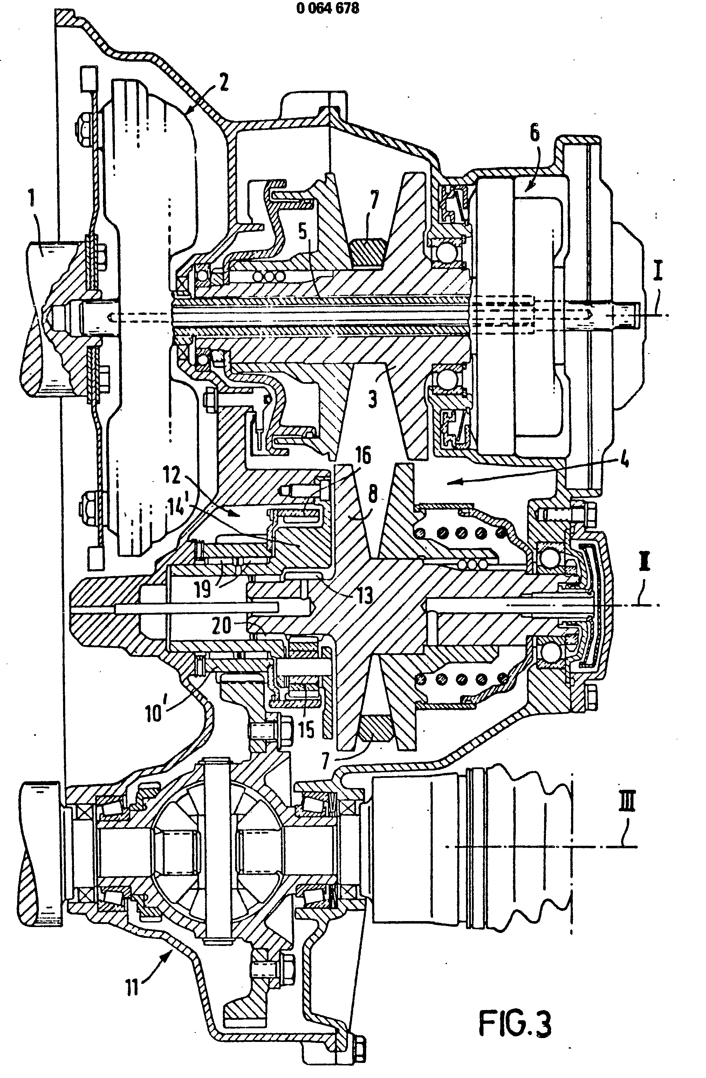

Bei der in Fig. 3 dargestellten Ausführungsform des Getriebeaggregats bilden die Hohlwelle 9 und das Antriebsritzel 10 ein einstückiges Bauteil 10', das auf einer Stützhülse 14' über Nadellager 19 drehbar gelagert ist. Die Stützhülse 14' bildet ein mit dem Planetenradträger des Umkehr- und Reduktionsgetriebes 12 einstückiges Bauteil, in deren Innerem sich die Sekundärwelle 8 über weitere Nadellager 20 abstützt. Die bezüglich der Sekundärwelle 8 vorliegenden hohen Relativdrehzahlen können damit bei diesem Getriebeaggregat an dem Umkehr- und Reduktionsgetriebe 12 durch die Nadellager 19 und 20 wesentlich günstiger aufgenommen werden als bei dem Getriebeaggregat in der Ausführungsform gemäß Fig. 2, wo die Sekundärwelle 8 nur über die Nadellager 18 an der Hohlwelle 9 abgestützt ist.

**Patentansprüche**

1. Getriebeaggregat für Fahrzeuge, insbesondere für Kraftfahrzeuge mit Frontantrieb, mit einem in Fahrzeugquerrichtung angeordneten Antriebsmotor, dessen Antriebswelle (1) die Primärwelle (3) eines stufenlos regelbaren und mittels eines vorzugsweise als Planetenradgetriebe (6) ausgebildeten Vorwärtsgang-Rückwärtsgang-Umschaltgetriebes schaltbaren Umschlingungsgetriebes (4) antreibt, dessen über ein Umschlingungsorgan (7) in gleicher Drehrichtung getriebene Sekundärwelle (8) koaxial zu dem Antriebsritzel (10) eines Differentialgetriebes (11) mit Achsabtriebswellen angeordnet ist, dadurch gekennzeichnet, daß ein koaxial zur Sekundärwelle (8) des Umschlingungsgetriebes (4) angeordnetes, als nicht schaltbares Planetenradgetriebe ausgebildetes zusätzliches Umkehr- und Reduktionsgetriebe (12) mit seinem Eingangsglied (13) mit der Sekundärwelle (8) und mit seinem Ausgangsglied (16) mit dem Antriebsritzel (10) des Differentialgetriebes (11) verbunden ist.

2. Getriebeaggregat nach Anspruch 1, dadurch gekennzeichnet, daß die Sekundärwelle (8) ein Sonnenrad (13) des Umkehr- und Reduktionsgetriebes (12) bildet, das mit einem auf einem am Gehäuse festgelegten Planetenradträger (14) gelagerten Satz Planetenräder (15) im Eingriff steht, die wieder im Eingriff mit einem Ringrad (16) stehen, das über einen Steg (17) treibend mit einer Welle (9) verbunden ist, auf der das Antriebsritzel (10) des Differentialgetriebes (11) angeordnet ist.

3. Getriebeaggregat nach den Ansprüchen 1 und 2, dadurch gekennzeichnet, daß die das Antriebsritzel (10) des Differentialgetriebes (11) tragende Welle (9) eine Hohlwelle ist, die über Nadellager (18) auf der Sekundärwelle (8) drehbar gelagert ist.

4. Getriebeaggregat nach den Ansprüchen 1 und 2, dadurch gekennzeichnet, daß die Welle (9) mit dem Antriebsritzel (10) ein einstückiges Bauteil (10') bildet, das über Nadellager (19) auf einer mit dem Planetenradträger einstückig ausgebildeten Stützhülse (14') drehbar gelagert ist, in deren Innerem sich die Sekundärwelle (8) über weitere Nadellager (20) abstützt.

## Claims

1. Transmission assembly for vehicles, especially for front wheel drive motor vehicles, in which the drive motor is arranged transverse with respect to the vehicle, the motor drive shaft (1) driving the primary shaft (3) of an infinitely variable belt drive (4) that is shiftable by means of a forward and reversing gear mechanism which is preferably designed as a planetary gearing (5), the secondary shaft (8) of said infinitely variable belt drive (4) being driven in the same direction of rotation by means of a wrap-around member (7) is being coaxially arranged with respect to the drive pinion (10) of a differential gear (11) with axle output shafts, characterised in that there is provided coaxially with respect to the secondary shaft (8) of said infinitely variable belt drive (4) an additional reversing and reduction gear (12) designed as an unshiftable planetary gearing which with its input member (13) is connected to said secondary shaft (8) and with its output member (16) with said drive pinion (10) of said differential gear (11).

2. Transmission assembly according to claim 1, characterised in that said secondary shaft (8) forms a sun gear (13) of said reversing and reduction gear (12) which meshes with a set of planet gears (15) mounted on a planet carrier (14) that is fixed to the casing whilst said planet gears (15) in turn mesh with a ring gear (16) which by means of a rim (17) is drivingly connected to a shaft (9) on which said drive pinion (10) of said differential gear (11) is mounted.

3. Transmission assembly according to claims 1 and 2, characterised in that said shaft (9) carrying said drive pinion (10) of said differential gear (11) is a hollow shaft which by means of needle bearings (18) is rotatably mounted on said secondary shaft (8).

4. Transmission assembly according to claims 1 and 2, characterised in that said shaft (9) forms an integral member (10') with said drive pinion (10) which by means of needle bearings (19) is rotatably mounted on a supporting bush (14') that forms an integral unit with said planet carrier and inside of which said secondary shaft (8) is supported by means of further needle bearings (20).

## Revendications

1. Ensemble de transmission pour véhicules, en particulier pour véhicules automobiles à traction avant, comportant un moteur d'entraînement disposé dans le sens transversal du véhicule, et dont l'arbre moteur (1) entraîne l'arbre primaire (3) d'une transmission par lien flexible (4) apte à varier en continu et à changer de sens de marche à l'aide d'un inverseur marche avant-marche arrière réalisé de préférence sous la forme d'un engrenage épicycloidal (6), l'arbre secondaire (8) de cette transmission par lien flexible, entraîné dans le même sens de rotation par l'intermédiaire d'un organe de liaison flexible (7), étant disposé coaxialement au pignon moteur (10) d'un engrenage différentiel (11) pourvu d'arbres de sortie axiaux, caractérisé en ce qu'un engrenage réducteur et inverseur supplémentaire (12) disposé coaxialement à l'arbre secondaire (8) de la transmission par lien flexible (4) et réalisé sous la forme d'un engrenage épicycloïdal non commutable, est relié à l'arbre secondaire (8) par son organe d'entrée (13) et au pignon moteur (10) de l'engrenage différentiel (11) par son organe de sortie (16).

2. Ensemble de transmission selon la revendication 1, caractérisé en ce que l'arbre secondaire (8) forme un planétaire (13) de l'engrenage réducteur et inverseur (12), qui attaque un train de satellites (15) monté sur une cage de transmission planétaire (14) fixé au carter, ces satellites (15) attaquant à leur tour une couronne dentée (16) qui est reliée à entrainement, par l'intermédiaire d'un étrier (17), à un arbre (9) sur lequel le pignon moteur (10) de l'engrenage différentiel (11) est disposé.

3. Ensemble de transmission selon les revendications 1 et 2, caractérisé en ce que l'arbre (9) portant le pignon moteur (10) de l'engrenage différentiel (11) est un arbre creux qui est monté à rotation sur l'arbre secondaire (8) par l'intermédiaire de roulements à aiguilles (18).

4. Ensemble de transmission selon les revendications 1 et 2, caractérisé en ce que l'arbre (9) constitue avec le pignon moteur (10) un composant d'un seul tenant (10'), qui est monté à rotation, par l'intermédiaire de roulements à aiguilles (19), sur un fourreau d'appui (14') solidarisé à la cage de transmission planétaire (14), l'arbre secondaire (8) prenant appui à l'intérieur de cette bague (14'), par l'intermédiaire d'autres roulements à aiguilles (20).

FIG. 1

0 064 678

FIG.2

0 064 678

FIG.3